# EUROPEAN PATENT APPLICATION

(11) **EP 2 423 805 A2**
(43) Date of publication of application: **29.02.2012**
(21) Application number: 11178439.3
(22) Date of filing: 23.08.2011
(51) Int. Cl.: G06F 3/14

(54) **Method for Controlling Display Unit Having a Plurality of Display Panel and Mobile Terminal Operated Based Thereon**

(30) Priority: 23.08.2010 KR 20100081450
(71) Applicant: SAMSUNG ELECTRONICS CO., LTD., Suwon-si, Gyeonggi-do (KR)
(72) Inventor: Shin, Shong Uk, Gyeonggi-do (KR)
(74) Representative: Harrison Goddard Foote

(57) **Abstract**

A method and a mobile terminal for controlling a display unit having a plurality of display panels are provided. The method for controlling a display unit having a plurality of display panels, includes collecting screen data to be output on the display unit, generating a data enable signal to determine a time period during which the screen data in each of the display panels is to be output, and outputting the screen data on a corresponding display panel during time periods in which the data enable signals are transferred.

## Description

### BACKGROUND OF THE INVENTION

### 1. Field of the Invention:

The present invention relates to control of a display unit in a mobile terminal. More particularly, the present invention relates to a method for controlling a display unit having a plurality of display panels supporting such that the display unit may stably display data and a mobile terminal operated based thereon.

### 2. Description of the Related Art:

Mobile terminals include various functions, such as videophone, electronic note-taking, and Internet access in addition to voice call and short message transmission. Mobile terminals also use upgraded hardware and software to support various functions. A typical mobile terminal supports execution of various application programs based on a hardware having high processing performance.

Because the mobile terminal should be portable, the size of a display unit may be limited. Increasing the size of the display unit is one approach to address this issue. However, this approach is limited, as increasing the size of the display unit also increases the weight of a mobile terminal. Accordingly, it has been suggested to provide the mobile terminal with a plurality of display panels, which together form one large display unit according to a physical operation state of the mobile terminal to enlarge an area of a display unit.

When a certain image is displayed based on a plurality of display panels, the conventional mobile terminal may experience a switching noise due to data switching output on the plurality of display panels. Furthermore, an internal display panel boost circuit stops in a stop interval of a clock signal.

### SUMMARY OF THE INVENTION

Aspects of the present invention are to address at least the above-mentioned problems and/or disadvantages and to provide at least the advantages described below. Accordingly, an aspect of the present invention is to provide a method for controlling a display unit having a plurality of display panels supporting such that the display unit may stably display data, and a mobile terminal operated based thereon.

Another aspect of the present invention is to provide a method for controlling a display unit capable of removing a switching noise according to data switching and a stop phenomenon of a boost circuit, and a mobile terminal operated based thereon.

In accordance with an aspect of the present invention, a method for controlling a display unit having a plurality of display panels is provided. The method includes collecting screen data to be output on the display unit, generating a data enable signal to determine a time period during which the screen data in each of the display panels is to be output, and outputting the screen data on a corresponding display panel during time periods in which the data enable signals are transferred.

In accordance with another aspect of the present invention, a mobile terminal operated based on a display unit having a plurality of display panels is provided. The terminal includes a memory for storing screen data, a display unit including a plurality of display panels for displaying images corresponding to one screen based on the screen data, and a controller for generating and supplying data enable signals used for controlling an activated time point of screen data supplied to the plurality of display panels, respectively.

In accordance with another aspect of the present invention, a mobile terminal is provided. The mobile terminal includes a controller for generating a plurality of data enable signals controlling display of screen data, and a display unit for displaying a screen corresponding to the screen data to the user, the display unit including a plurality of display panels, each display panel displaying an image corresponding to a portion of the screen, wherein the display unit displays the screen data to one of the plurality of display panels when a corresponding data enable signal is high, and wherein when one of the plurality of data enable signals is high, the others of the plurality of data enable signals are not high.

As illustrated previously, in a method for controlling a display unit having a plurality of display panels and a mobile terminal operated based thereon, screen data constructing one screen may be stably displayed on the plurality of display panels without errors.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a configuration of a mobile terminal according to an exemplary embodiment of the present invention;

FIG. 2 is a detailed view illustrating configurations of a controller and a display unit shown in FIG. 1 according to an exemplary embodiment of the present invention;

FIG. 3 is a signal waveform view illustrating control of a display unit according to an operation of a display control unit according to an exemplary embodiment of the present invention; and

FIG. 4 is a flowchart illustrating a method for controlling a display unit according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding, but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention is provided for illustration purposes only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

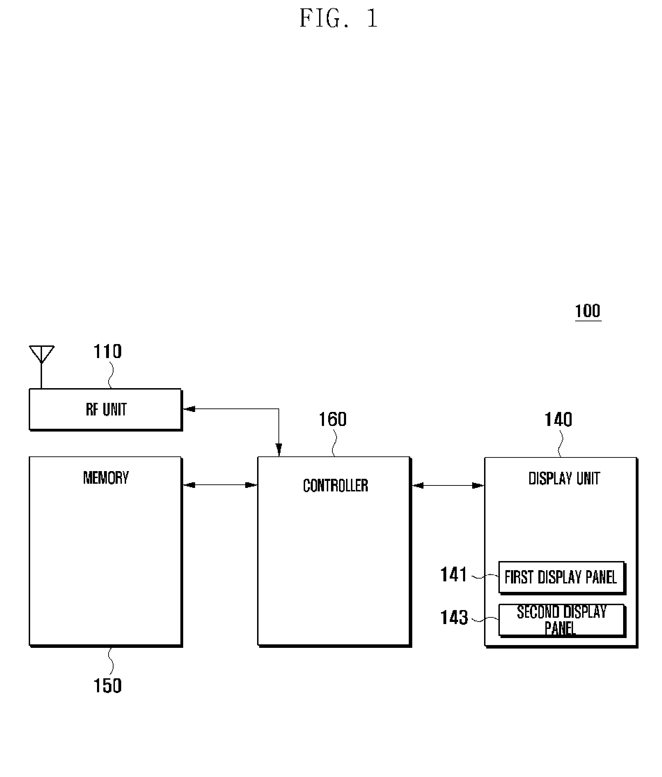

FIG. 1 is a block diagram illustrating a part of a configuration of a mobile terminal according to an exemplary embodiment of the present invention.

Referring to FIG. 1, a mobile terminal 100 of the present invention may include a Radio Frequency (RF) unit 110, a display unit 140, a memory 150, and a controller 160.

The mobile terminal 100 outputs data received through the RF unit 110 or data to be output by various application programs stored in the memory 150. When data are output on a first display panel 141 and a second display panel 144 under the control of the controller 160, the mobile terminal 100 may support output of respective screen data based on a first enable signal for driving the first display panel 141 and a second enable signal for driving the second display panel 143. Accordingly, a single screen is constructed on the display unit 140, and the mobile terminal 100 prevents various display error problems occurring due to common clock division. The mobile terminal 100 is described below.

The RF unit 110 forms a first communication channel for a speech call, a second communication channel for a videophone call, and a third communication channel for transmitting data such as images or messages under the control of the controller 160. The RF unit 110 forms a speech call channel, a data communication call channel, and a videophone call channel between mobile communication systems. The RF unit 110 may include a transmitter (not shown) up-converting a frequency of a transmitted signal and amplifying the signal, a receiver (not shown) low-noise-amplifying a received signal and down-converting the signal. The RF unit 110 may receive data through a formed channel, and output the received data to the display unit 140 under the control of the controller 160. The RF unit 110 may receive various data and transfer the received data to the memory 150 under the control of the controller 160.

The mobile terminal 100 may implement various screens used for an operation of the RF unit 110 through the display unit 140. For example, when the mobile terminal 100 accesses a web server through the RF unit 110 and a network, the RF unit 110 receives screen data provided from a corresponding web server. The screen data received by the RF unit 110 may be outputted to the display unit 140 under the control of the controller 160. The screen data provided from the web server may be divided into data output to a first display panel 141 and data output to a second display panel 143 of the display unit 140.

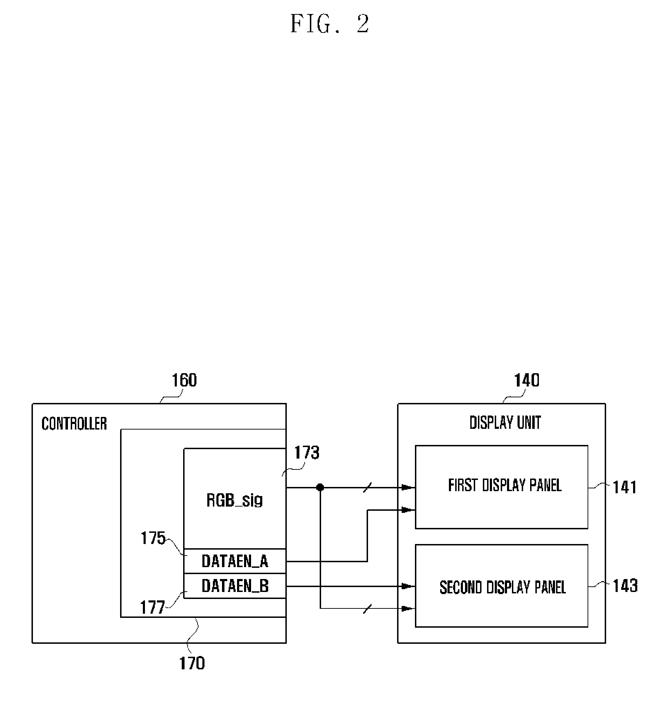

The display unit 140 displays information input by a user or information provided to the user as well as various menus of the mobile terminal 100. The display unit 140 may provide various screens such as an idle screen, a menu screen, a message making screen, a call screen, and a mobile terminal booting screen according to utilization of the mobile terminal 100. The display unit 140 may be a flat panel display such as a Liquid Crystal Display (LCD) or an Organic Light Emitted Diode (OLED). The display unit 140 may be disposed at an upper portion or a lower portion of a touch panel and act as a touch screen. The display unit 140 includes a plurality of display panels. A screen output on the display unit 140 comprises one screen on a plurality of display panels. Screen data respectively output on the first display panel 141 and the second display panel 143 may become data output by dividing an image into two halves. Data output of the display unit 140 is described below with reference to FIG. 2. The display unit 140 is shown in FIG. 2 as having two display panels, a first display panel 141 and a second display panel 143. However, exemplary embodiments of the present invention are not limited thereto. The display unit 140 may include three or more display panels.

The memory 150 may store various data to be output on the display unit 140 as well as application programs used for a function operation according to an exemplary embodiment of the present invention. When the display unit 140 is a touch screen, the memory 150 may store information about a key map or a menu map for operation of the touch screen, and a touch lock part release region. The key map and the menu map may be configured in various forms. The key map may become a keyboard map, a 3*4 key map, a QWERTY key map, or a control key map for controlling an operation of a currently activated application program. Further, the menu map may become a menu map for controlling an operation of a currently activated application program. The memory 150 may include a program area and a data area.

The program area may store a program for controlling an overall operation of the terminal 100, an Operating System (OS) booting the terminal 100, application programs used for playback of various files, for example, an application program for supporting a call function of the mobile terminal 100, a web browser for accessing an Internet server, a music application program for playing other sound sources, an image output application program for displaying photographs, and a moving image playback application program. The program area may also store a data output control program.

The data output control program includes a routine selecting screen data required to be output on the display unit 140 according to an operation of the mobile terminal 100, a routine for generating an RGB relation signal corresponding to the selected screen data, and a routine for generating a data enable signal such that an RGB relation signal corresponding to the selected screen data is divided into a signal to be output to first display panel 141 and a signal to be output to the second display panel 143. The data output control program generates respective data enable signals for various screen data to be output according to an operation of the mobile terminal 100 and transfers the data enable signals to a controller hardware allotted for driving the display unit 140, such that the data enable signals are transmitted to the first display panel 141 and the second display panel 143.

The data area is an area storing data created according to utilization of the mobile terminal 100, and may store phone book data, at least one icon and various contents according to a widget function. The data area may store screen data to be output on the display unit 140 according to an operation of the mobile terminal 100, and load corresponding screen data to the controller 160 according to a request of the data output control program.

The controller 160 controls the supply of power to respective constructions of the mobile terminal 100 to execute initialization procedures of the respective constructions. The controller 160 also control outputs of respective screen data signals on a plurality of display panels according to transfer of data enable signals corresponding to respective display panels according to an exemplary embodiment of the present invention. To do this, the controller 160 may include a display control unit. The display control unit is described below with reference to FIG. 2.

As described above, the mobile terminal 100 may generate data enable signals corresponding to respective display panels with respect to various screen data used for an operation of the mobile terminal 100, and control output of screen data on corresponding display panels according to corresponding data enable signals, thereby outputting screen data on the display unit 140 without incurring problems such as a display error according to sharing of a common clock. The mobile terminal 100 may further include an input unit for user input and an audio processing unit for outputting or collecting audio signals to be synchronized with data to be output on the display unit 140.

The input unit 120 receives input of numeral or character information, and includes a plurality of input keys and function keys for setting various types of functions. The function keys may include arrow keys, side keys, and hot keys set to perform certain functions. The input unit generates a key signal associated with user setting and function control of the mobile terminal 100 and transfers the generated key signal to the controller 160. The input unit may be a QWERTY key pad, a 3*4 key pad, or a 4*3 key pad with a plurality of keys. Further, the input unit may be implemented by a touch screen, as described above. The audio processing unit may include a speaker playing audio data transmitted and received at the call time, audio data included in a received message, and audio data according to playback of audio files stored in the memory, and a microphone collecting a user's voice or other audio signals at the call time.

FIG. 2 is a detailed view illustrating configurations of a controller and a display unit shown in FIG. 1 according to an exemplary embodiment of the present invention.

Referring to FIG. 2, the controller 160 includes a display control unit 170. The display control unit 170 may control activation timing of screen data to be output on the first display panel 141 and the second display panel 143 of the display unit 140 to divide and output the screen data.

When the mobile terminal 100 is activated, the controller 160 loads screen data to be output on the display unit 140, from the memory 150 according to preset schedule information. The screen data may be, for example, idle screen data. The controller 160 may receive web access screen data, broadcast data, and content data used for operation of the mobile terminal, for example, web access, broadcast content, and content playback through the RF unit 110 or read data stored in the memory 150, and transfer the read data to the display control unit 170. The mobile terminal 100 may accordingly include a broadcast reception module for receiving broadcasts.

When the controller 160 transfers screen data to be output on the display unit 140, the display control unit 170 may classify a signal to output corresponding screen data on the display unit 140. To do this, the display control unit 170 may include an RGB_Sig signal supply part 173, an RGB_DATAEN_A signal supply part 175, and an RGB_DATAEN_B signal supply part 177.

The RGB_Sig signal supply part 173 generates and classifies an RGB_Sig signal including an RGB_VSYNC signal, an RGB_HSYNC signal, an RGB_CLK signal, and an RGB_DATA signal with respect to screen data provided from the controller 160. The RGB_Sig signal supply part 173 supplies the RGB_Sig signal to the first display panel 141 and the second display panel 143. The RGB_VSYNC signal denotes a vertical synchronizing signal of the first display panel 141 and the second display panel 143 of the display unit 140. The RGB_HSYNC signal denotes a horizontal synchronizing signal of the first display panel 141 and the second display panel 143. The RGB_CLK signal denotes a common clock signal used for output of the screen data, and the RGB_DATA signal denotes a data signal to be output on the display unit 140.

The RGB_DATAEN_A signal supply part 175 generates and supplies an RGB_DATAEN_A signal to the first display panel 141. The RGB_DATAEN_B signal supply part 177 may generate and supply an RGB_DATAEN_B signal to the second display panel 143. The RGB_DATAEN_A may be a signal defining data to be output on the first display panel 141 as a valid value. The RGB_DATAEN_B signal may be a signal defining data to be output on the second display panel 143 as a valid value. The RGB_DATAEN_A signal and the RGB_DATAEN_B signal have high state signal regions that do not overlap each other.

As described above, the RGB_DATAEN_A signal supply part 175 generates the RGB_DATAEN_A signal, and the RGB_DATAEN_B signal supply part 177 generates the RGB_DATAEN_B signal. However, the corresponding signal supply parts may convert a data enable signal generated and provided from the controller 160 suited to timing to be transferred to a corresponding display panel and then support supply of corresponding signals to allotted display panels, respectively. When the display unit 140 constructs one screen using three display panels, the display control unit 170 may generate an RGB_DATAEN_A signal, the RGB_DATAEN_B signal, and the RGB_DATAEN_C signal, and operate the generated signals to output one screen data on each display panel. The process may similarly be adapted for four or more display panels.

The first display panel 141 may output screen data corresponding to a vertical or horizontal half of screen data to be output on the display unit 140 according to an operation of the mobile terminal 100. The first display panel 141 is described below with reference to output of screen data corresponding to a horizontal half. However, the screen data may be vertically divided according to arranged locations of the first display panel 141 and the second display panel 143. The first display panel 141 receives an RGB_Sig signal including an RGB_VSYNC signal, an RGB_HSYNC signal, RGB_CLK signal, and an RGB_DATA and an RGB_DATAEN_A signal among signals generated and classified by the display control unit 170. The first display panel 141 may output a part of screen data based on data received while the RGB_DATAEN_A signal is at a high level.

The second display panel 143 may output remaining screen data not output on the first display panel 141 output screen data corresponding to a vertical or horizontal half of screen data to be output on the display unit 140 according to an operation of the mobile terminal 100. The second display panel 143 receives an RGB_Sig signal including an RGB_VSYNC signal, an RGB_HSYNC signal, an RGB_CLK signal, and an RGB_DATA signal and an RGB_DATAEN_B signal, and outputs a part of screen data based on the received signals. The second display panel 143 may output screen data to output a part of the screen data only while the RGB_DATAEN_B is at a high level.

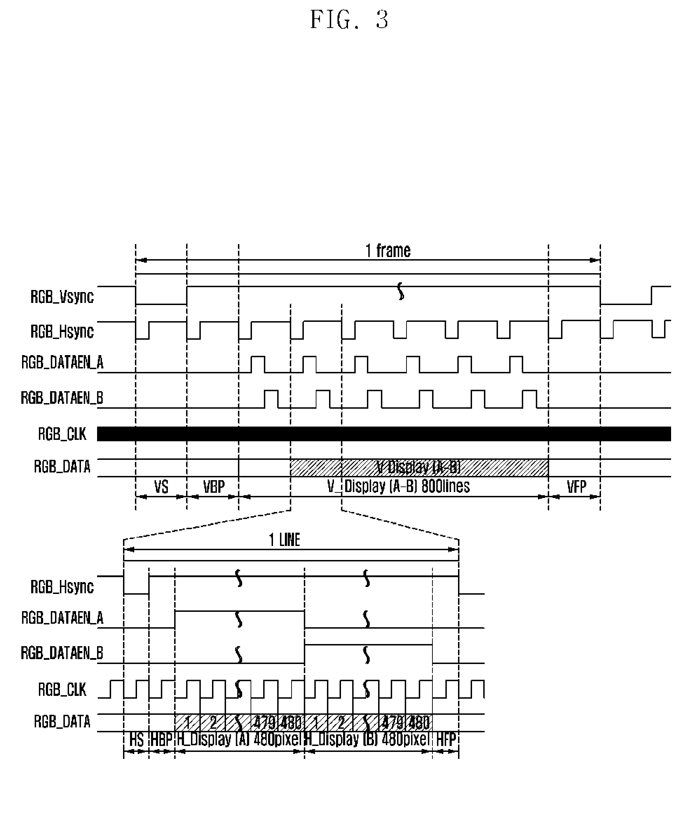

As described above, the mobile terminal 100 operates an RGB_CLK in common to prevent display errors due to a division operation of a clock signal. The mobile terminal 100 may operate data enable signals by display panels to more stably output one screen data on a plurality of display panels. Output of screen data is described below with reference to FIG. 3.

FIG. 3 is a signal waveform view illustrating screen data output of a mobile terminal according to an exemplary embodiment of the present invention.

Referring to FIG. 3, the mobile terminal 100 operates an RGB_VSYNC signal, an RGB_HSYNC signal, an RGB_CLK signal, an RGB_DATA signal, an RGB_DATAEN_A signal, and an RGB_DATAEN_B signal to output screen data. In the example shown in FIG. 3, the display unit 140 has 960 horizontal pixels. Accordingly, the first display panel 141 and the second display panel 143 may each have 480 horizontal pixels. Period rates of respective signals described below may be adjusted or designed differently according to characteristics of a display panel or an output scheme of an output image.

One period of an RGB_VSYNC signal is one frame. The RGB_VSYNC signal provides a signal having one low state and one high state during one frame period. A low state of the RGB_VSYNC signal may have an interval very shorter than a high state thereof. The RGB_HSYNC signal has 9 total periods during an output time of one frame. The RGB_HSYNC signal has 9 low states and 9 high states. An interval of a low state in the RGB_HSYNC signal may be set to be shorter than that of a high state. The 9 periods may be changed according to characteristics of a display panel. The RGB_HSYNC signal may have one period while a signal is output to a 1 line.

The RGB_DATAEN_A signal has six total periods during a one frame period. The RGB_DATAEN_A signal may be a signal having six high states and low states during a time period of a third RGB_HSYNC signal to a time period of an eighth RGB_HSYNC signal based on the RGB_HSYNC signal. A high state interval during one period of the RGB_DATAEN_A signal may be formed to be shorter than a high state interval during one period of the RGB_HSYNC signal. The RGB_DATAEN_A signal is a signal outputting an RGB_DATA signal to the first display panel 141.

In the same manner as in the RGB_DATAEN_A signal, the RGB_DATAEN_B has six total periods during one frame period. The RGB_DATAEN_B may be a signal having six high states and low states during a time period of a third RGB_HSYNC signal to a time period of an eighth RGB_HSYNC signal based on the RGB_HSYNC signal. A high state interval of a period of the RGB_DATAEN_B may be formed to be shorter than that of a period of the RGB_HSYNC signal. The RGB_DATAEN_B signal and the RGB_DATAEN_A signal may be constructed not to overlap a high state of one period of the RGB_DATAEN_B signal with a high state of one period of the RGB_DATAEN_A signal, considering timing. The RGB_DATAEN_B signal is a signal outputting an RGB_DATA signal to the second display panel 143. Accordingly, when the RGB_DATAEN_B signal is at a high level, an RGB_DATA signal may be output only to the second display panel 143. When the RGB_DATAEN_A signal is at a high level, an RGB_DATA signal may be output only to the first display panel 141. Finally, the RGB_DATAEN_A signal and the RGB_DATAEN_B signal have a high state that does not overlap each other. While one of the RGB_DATAEN_A signal and the RGB_DATAEN_B signal transitions from a high state to a low state, the other transitions from the low state to the high state to obtain a masking effect.

The RGB_DATAEN_A signal maintains a high state for a time corresponding to almost a first half of a 1 line period of the RGB_HSYNC signal. The RGB_DATAEN_B maintains a high state for a time corresponding to almost a second half of a 1 line of the RGB_HSYNC signal. A header value of RGB_DATA signal is supplied during two periods of the RGB_CLK signal based on the RGB_CLK signal and the RGB_HSYNC signal. While the RGB_DATAEN_A signal is at a high level, during 480 periods of a first half except for two periods of the RGB_CLK signal, the RGB_DATA signal is supplied to the first display panel 141 according to an RGB_DATAEN_A signal. While the RGB_DATAEN_B signal is at a high level, the RGB_DATA signal may be supplied to the second display panel 143 according to the RGB_DATAEN_B signal.

As described above, the display unit 140 includes the first display panel 141 and the second display panel 143 with 960 total pixels. When the pixels of the display unit 140 change, the periods and the lengths of the RGB_DATAEN_A signal, the RGB_DATAEN_B signal, and the RGB_DATA signal may change accordingly. However, the RGB_DATAEN_A signal and the RGB_DATAEN_B signal are supported to respectively output the RGB_DATA signal on the first display panel 141 and the second display panel 143 for a non-shared time to stably output data to two display panels without causing a certain data display error.

The RGB_CLK signal is a common signal shared to drive the display unit 140. The RGB_DATA signal is a data signal supplied to the first display panel 141 and the second display panel 143. The first display panel 141 and the second display panel 143 may share and use the RGB_VSYNC signal and the RGB_HSYNC signal.

As described above, a mobile terminal having a plurality of display panels according to an exemplary embodiment of the present invention may transfer data enable signals to respective display panels such that data may be output to the respective display panels for a non-overlapping time, and share signals used for other data outputs to support stable data output without causing a separate display error.

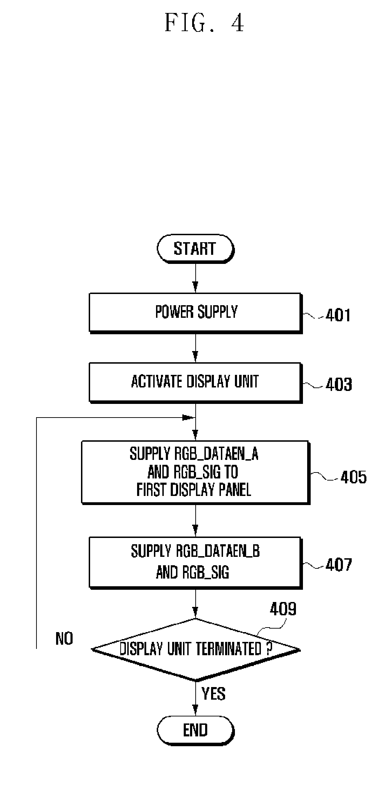

A mobile terminal having a plurality of display panels according to an example embodiment of the present invention has been described above with reference to accompanying drawings. A method for controlling a display unit having a plurality of display panels is described below with reference to FIG. 4.

FIG. 4 is a flowchart illustrating a method for controlling a display unit having a plurality of display panels according to an exemplary embodiment of the present invention.

Referring to FIG. 4, a user supplies power to the mobile terminal 100 for an operation of the mobile terminal 100 in step 401. For power supply, the user may connect a battery or a charger of the mobile terminal 100 and generate an input signal for power supply. When power is supplied to the mobile terminal 100, the controller 160 produces power used for operations of the mobile terminal 100 using the supplied power, and initializes the mobile terminal 100 using the produced power.

The mobile terminal 100 controls the display unit 140 to be activated in step 403. The mobile terminal 100 produces power to drive the display unit 140, and collects screen data output on the display unit 140 according to preset stored schedule information. For example, the mobile terminal 100 may read screen data constituting an idle screen from the memory 150.

When reading the screen data from the memory 150, the mobile terminal 100 controls signal classification with respect to read screen data and generation of a control signal. The mobile terminal 100 generates an RGB_Sig signal, an RGB_DATAEN_A signal, and an RGB_DATAEN_B signal with respect to screen data to be output on the display unit 140. The RGB_Sig signal includes an RGB_VSYNC signal, an RGB_HSYNC signal, an RGB_CLK signal, and an RGB_DATA signal. The RGB_VSYNC signal is a vertical synchronizing signal of the display unit 140. The RGB_HSYNC signal is a horizontal synchronizing signal of the display unit 140. The RGB_CLK signal is a common clock signal for driving the display unit 140. The RGB_DATA signal is a signal corresponding to real data output on the display unit 140. The RGB_Sig signal may be supplied to the respective display panels in common. As described above, the RGB_DATAEN_A signal and the RGB_DATAEN_B signal may be designed to have a high state during half of one period of the RGB_HSYNC signal, and to have a high state during a non-overlapping period.

When the foregoing signals are generated and classified, the mobile terminal 100 supplies the RGB_DATAEN_A signal and the RGB_Sig signal to the first display panel 141 in step 405. The mobile terminal 100 may use the RGB_Sig signals supplied to the first display panel 141 to construct a screen during a first half being half of one period of the RGB_HSYNC signal only while the RGB_DATAEN_A is at a high level.

The mobile terminal 100 supplies the RGB_DATAEN_B signal and the RGB_Sig signal to the second display panel 143 in step 407. Because the RGB_DATAEN_B signal maintains a high state during a second half being half of one period of the RGB_HSYNC signal, the mobile terminal may construct a screen according to the RGB_Sig signal on the second display panel 143.

As described above, the mobile terminal 100 divides and outputs screen data comprising one screen into a first display panel 141 and a second display panel 143 without generating separate errors upon constructing screen data based on the screen to be displayed.

Subsequently, the mobile terminal 100 determines whether an input signal for terminating the display unit 140 is generated in step 409. When the input signal for terminating the display unit 140 is not generated, the mobile terminal 100 collects screen data for supporting an application program activated according to schedule information of the mobile terminal 100 or user input in step 405 and performs steps 405 and 407 for the collected screen data to construct one screen through two display panels.

As described above, in a method and an apparatus for controlling a display unit of a mobile terminal 100 having a plurality of display panels according to an exemplary embodiment of the present invention, the screen data are allotted to a corresponding display panel for supporting validity of data output to be supplied to respective display panels using data enable signals in a procedure that outputs one screen data to a plurality of display panels, and employs a data enable signal. The data enable signal may maintain a high state for a non-overlapping time while the RGB_HSYNC is at a high level to stably output one screen data on two display panels.

The mobile terminal 100 may further include various additional modules according to provision forms. When the mobile terminal 100 is a communication terminal, the mobile terminal may include additional units not discussed above, such as a near distance communication module for near distance communication, an interface exchanging data in a wired communication scheme or a wireless communication scheme of the mobile terminal 100, an Internet communication module for communicating with the Internet to perform an Internet function, and a digital broadcast module for receiving and broadcasting digital broadcasts. Since the structural elements may vary according to the digital device, these units are not described herein. However, the mobile terminal 100 may include structural elements equivalent to the foregoing structural elements. The above-described units of mobile terminal 100 may be substituted by specific constructions in the foregoing arrangements according to the provided form or another structure. This can be easily understood to those skilled in the present art.

The mobile terminal 100 according to an exemplary embodiment of the present invention may include various types of device having a communication module capable of performing data communication. For example, the mobile terminal 100 may include an information communication device and a multimedia device, such as a Portable Multimedia Player (PMP), a digital broadcasting player, a Personal Digital Assistant (PDA), a music player, a portable game terminal, a Smart Phone, a notebook computer, and a handheld PC as well as various mobile communication terminals corresponding to various communication systems.

While the invention has been shown and described with reference to certain exemplary embodiments thereof, it will be understood by those skilled in the art various changes in form and details may be made therein without departing from the spirit and scope of the invention as defined by the appended claims and their equivalents.

## Claims

1. A method for controlling a display unit having a plurality of display panels, the method comprising:
collecting screen data to be output on the display unit;
generating a data enable signal to determine a time period during which the screen data in each of the display panels is to be output; and
outputting the screen data on a corresponding display panel during time periods in which the data enable signals are transferred.

2. The method of claim 1, wherein the generating of the data enable signals comprises generating a plurality of enable signals to be supplied to the plurality of display panels, respectively.

3. The method of claim 2, wherein the plurality of data enable signals are generated not to overlap respective high state time periods with each other.

4. The method of claim 2, wherein one of the plurality of enable signals transitions from a low state to a high state when others of the plurality of enable signals transition from the high state to the low state.

5. The method of claim 1, wherein the screen data include at least one of a vertical synchronizing signal, a horizontal synchronizing signal, a common clock signal, and an RGB data signal.

6. The method of claim 5, wherein the generating of the data enable signals comprises generating a plurality of data enable signals to be supplied to the plurality of display panels to have a high state time period that do not overlap in one time period of the horizontal synchronizing signal, respectively.

7. The method of claim 5, wherein the outputting of the screen data comprises:
supplying the screen data to the plurality of display panels in common; and
activating a display panel to which the data enable signal of a high state is supplied and outputting the screen data on the activated display panel.

8. The method of claim 1, wherein the images displayed on the plurality of display panels comprise one screen based on the screen data.

9. A mobile terminal operated based on a display unit having a plurality of display panels, the terminal comprising:
a memory for storing screen data;
a display unit including a plurality of display panels for displaying images corresponding to one screen based on the screen data; and
a controller for generating and supplying data enable signals used for controlling an activated time point of screen data supplied to the plurality of display panels, respectively.

10. The mobile terminal of claim 9, wherein the controller generates a plurality of data enable signals to be supplied to the plurality of display panels, respectively.

11. The mobile terminal of claim 10, wherein the plurality of data enable signals each have high state time periods that do not overlap with each other, respectively.

12. The mobile terminal of claim 10, wherein one of the plurality of enable signals transitions from a low state to a high state when others of the plurality of data enable signals transition from the high state to the low state.

13. The mobile terminal of claim 9, wherein the screen data include at least one of a vertical synchronizing signal, a horizontal synchronizing signal, a common clock signal, and an RGB data signal.

14. The mobile terminal of claim 13, wherein the controller generates a plurality of data enable signals to be supplied to the plurality of display panels to have a high state time period that do not overlap with one time period of the horizontal synchronizing signal, respectively.

15. The mobile terminal of claim 13, wherein the display unit outputs the screen data supplied to the plurality of display panels in common to display panels to which the data enable signal of a high state is supplied.
